# EUROPÄISCHE PATENTSCHRIFT

(11) **EP 2 093 334 B1**
(45) Veröffentlichungstag und Bekanntmachung des Hinweises auf die Patenterteilung: **16.01.2013**
(21) Anmeldenummer: 09152901.6
(22) Anmeldetag: 16.02.2009
(51) Int. Cl.: E04B 1/26, E04B 1/61, F16B 5/00, F16B 12/22

(54) **Verbindungskörper insbesondere zum Verbinden von zwei Holzbauteilen**
Connecting member especially for connecting two wood construction elements
Corps de raccordement notamment pour connecter deux éléments de construction en bois

(30) Priorität: 22.02.2008 DE 102008010612
(43) Veröffentlichungstag der Anmeldung: 26.08.2009
(73) Patentinhaber: Kratzer, Daniel, 76437 Rastatt (DE)
(72) Erfinder: Heitz, Walter, Dr., 76437 Rastatt (DE)
(74) Vertreter: Reule, Hanspeter

(56) Entgegenhaltungen:
- EP-A1- 1 288 508
- DE-A1-102004 059 573
- GB-A- 831 824

## Beschreibung

Die Erfindung betrifft einen Verbindungskörper zur Herstellung einer Verbindung zwischen zwei Bauteilen, insbesondere zwischen zwei Holzbauteilen, gemäß Oberbegriff des Anspruchs 1.

Ein solcher Verbindungskörper ist beispielsweise aus der DE 10 2004 059 573 A8 bekannt. Zur Verbindung zweier Holzbauteile wird er an einem der Bauteile befestigt. Am zweiten Holzbauteil wird ein identischer Verbindungskörper befestigt, und die beiden Bauteile werden miteinander verbunden, indem die Verbindungskörper mit Abschnitten ihrer Querflächen aneinander anliegend miteinander verzahnt werden. Zur Befestigung des Verbindungskörpers am Holzbauteil ist er mit einem Zapfen zum Einstecken in eine Bohrung des Bauteils sowie mit Fixierlöchern zum Durchführen von Nägeln oder Schrauben versehen. Diese Befestigungsweise hat sich zwar in der Praxis bewährt. Für sehr schwere Bauteile ist jedoch bei dünn ausgeführten Verbindungskörpern zu befürchten, dass die Haltekraft des Absatzes nicht ausreicht.

Es ist daher Aufgabe der Erfindung, ein Verbindungselement der eingangs genannten Art derart weiterzubilden, dass es eine stabilere Verbindung der Bauteile ermöglicht.

Die Aufgabe wird erfindungsgemäß durch ein Verbindungselement mit den Merkmalen des Anspruchs 1 gelöst. Vorteilhafte Weiterbildungen sind Gegenstand der abhängigen Ansprüche.

Der Erfindung liegt der Gedanke zugrunde, dass beim Zusammenfügen zweier identischer erfindungsgemäßer Verbindungskörper der Absatz des einen Verbindungskörpers in die randoffene Ausnehmung des anderen Verbindungskörpers zumindest abschnittsweise formschlüssig eingreift. Hieraus resultiert eine belastbare Verzahnung der beiden Verbindungskörper. Die großflächige Anlage des Absatzes des einen Verbindungskörpers an die Begrenzungsfläche des anderen Verbindungskörpers wird durch die zumindest abschnittsweise identische Formgebung der Querfläche und der Begrenzungsfläche erhalten. Besonders vorteilhaft ist dabei, wenn die Verbindungsfläche in einer Mittelebene zwischen der Anlagefläche und der Oberfläche liegt. Die Höhe des Absatzes entspricht dann der Dicke der Grundplatte, so dass zwei zusammengefügte Verbindungskörper einen nahezu massiven Körper ergeben, bei dem die Oberfläche des einen Verbindungskörpers mit der Anlagefläche des jeweils anderen Verbindungskörpers fluchtet. Die Kompaktheit der Verbindung wird auch dadurch weiter erhöht, dass sich gemäß einer bevorzugten Ausführungsform der Absatz von der randoffenen Ausnehmung entlang einer in der Symmetrieebene verlaufenden Längsachse bis zum Rand der Grundplatte erstreckt. Besonders bevorzugt wird, dass der Absatz komplementär zur randoffenen Ausnehmung ausgebildet ist, so dass beim Zusammenfügen mit einem zweiten Verbindungskörper die randoffene Ausnehmung durch dessen Absatz vollständig ausgefüllt wird.

Die Querfläche kann einen ebenen Abschnitt aufweisen, der zur Oberfläche um den spitzen Winkel geneigt ist. Dabei wird bevorzugt, dass der ebene Abschnitt der Querfläche mit einem formidentischen ebenen Abschnitt der Begrenzungsfläche fluchtet. Es ist jedoch auch möglich, dass die Querfläche einen gebogenen Abschnitt aufweist, der an einen formidentischen Abschnitt der Begrenzungsfläche angrenzt.

Zweckmäßig weisen die Befestigungsmittel zwei sich durch die Grundplatte und gegebenenfalls durch den Absatz erstreckende Aufnahmekanäle für die Aufnahme von stiftförmigen Verbindungsmitteln, insbesondere von Schrauben oder Nägeln, auf. Die Aufnahmekanäle sind vorzugsweise in verschiedenen Richtungen gegen die Senkrechte auf die Anlagefläche geneigt. Dabei wird bevorzugt, dass die Aufnahmekanäle um denselben Winkel gegen die Senkrechte geneigt sind, vorzugsweise in entgegengesetzte Richtungen. Die Neigung von Schrauben oder Nägeln gegen die Senkrechte in verschiedene Richtungen ergibt eine stabilere Verbindung des Verbindungskörpers mit dem Bauteil, an dem es mit seiner Anlagefläche anliegt, als wenn die Schrauben oder Nägel parallel zueinander senkrecht in das Bauteil eingebracht werden. Zweckmäßig weisen die Befestigungsmittel weitere Aufnahmekanäle für stiftförmige Befestigungsmittel auf. Dadurch kann die Verbindung zwischen dem Verbindungskörper und dem Bauteil noch verstärkt werden. Um eine Fixierung des Verbindungskörpers am Bauteil vor Anbringung der Schrauben oder Nägel zu erleichtern, steht aus der Anlagefläche zweckmäßig mindestens ein Fixierdorn hervor. Desweiteren ist zu diesem Zweck vorteilhaft die Anlagefläche wenigstens teilweise aufgerauht.

Gemäß einer vorteilhaften Weiterbildung erstreckt sich durch den Absatz ein weiterer Aufnahmekanal für ein stiftförmiges Verbindungsmittel, dessen Mittelachse in der Querfläche und der Begrenzungsfläche verläuft. Wenn zwei Verbindungskörper zu einer Verbindungsvorrichtung zusammengefügt sind, kann durch diesen weiteren Aufnahmekanal beispielsweise eine Schraube zur kraftschlüssigen Verbindung der beiden Bauteile durchgeführt werden.

Im Folgenden wird die Erfindung anhand eines in der Zeichnung schematisch dargestellten Ausführungsbeispiels näher erläutert. Es zeigen:
- Fig. 1: einen Verbindungskörper gemäß einem ersten Ausführungsbei-spiel in Draufsicht auf die Verbindungsfläche;
- Fig. 2: den Verbindungskörper gemäß Fig. 1 in Seitenansicht, teilweise im Schnitt;

- Fig. 3: einen Querschnitt durch den Verbindungskörper gemäß Fig. 1 entlang der Linie A - A;
- Fig. 4: eine Vorderansicht einer endseitigen Partie des Verbindungskörpers gemäß Fig. 1;
- Fig. 5: zwei an Holzbauteilen angebrachte Verbindungskörper gemäß Fig. 1 vor dem Zusammensetzen zu einer Verbindungsvorrichtung;
- Fig. 6: einen Verbindungskörper gemäß einem zweiten Ausführungsbeispiel in Draufsicht auf die Verbindungsfläche;
- Fig. 7: den Verbindungskörper gemäß Fig. 6 in Seitenansicht, teilweise im Schnitt;
- Fig. 8a,: 9a jeweils einen Verbindungskörper in Draufsicht auf die Verbindungsfläche gemäß einem dritten und einem vierten Ausführungsbeispiel und
- Fig. 8b,: 9b jeweils einen Schnitt durch den Verbindungskörper gemäß Fig. 8a, 9a entlang der Symmetrieebene.

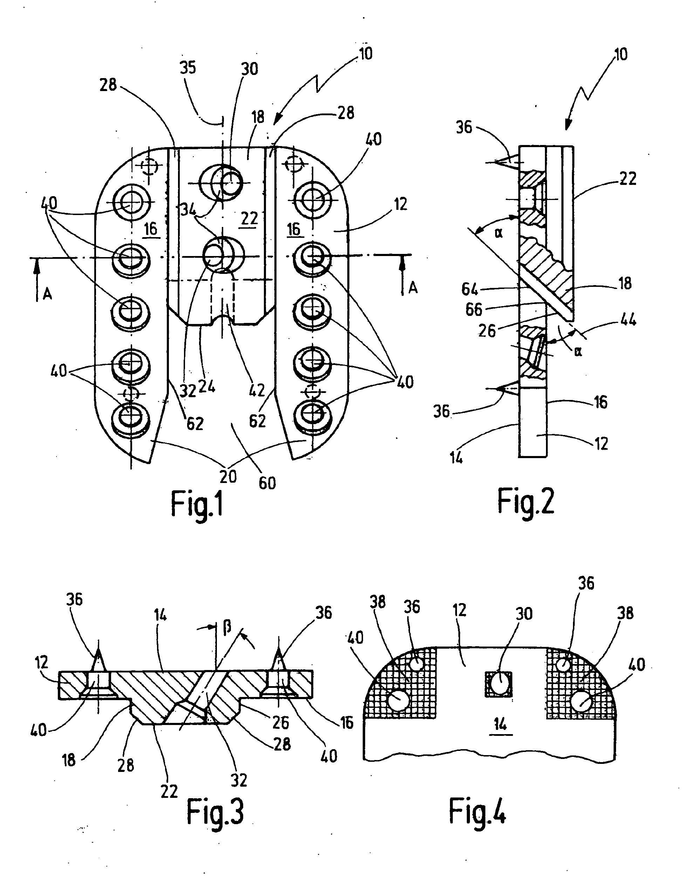

Der in Fig. 1 bis 4 dargestellte Verbindungskörper 10 ist einstückig aus Metall gefertigt. Er weist eine hufeisenförmige Grundplatte 12 auf mit einer Anlagefläche 14, die zur Anlage an ein Holzbauteil bestimmt ist. Der Anlagefläche 14 abgewandt weist die Grundplatte 12 eine zur Anlagefläche 14 parallel verlaufende Verbindungsfläche 16 auf, aus der ein Absatz 18 hervorsteht, der die gleiche Höhe aufweist wie die Grundplatte 12. Der Absatz 18 überdeckt den zwischen den Hufeisenschenkeln 20 angeordneten Verbindungsbereich der Grundplatte 12. Der Absatz 18 weist eine Oberfläche 22 auf, die zur Anlagefläche 14 und zur Verbindungsfläche 16 parallel verläuft. Die Oberfläche 22 ist durch eine Querfläche 26 mit der Verbindungsfläche 16 verbunden und erstreckt sich bis zu einer freien Kante 24 im Bereich zwischen den Hufeisenschenkeln 20, von der aus sich bis zur Verbindungsfläche 16 ein Abschnitt der Querfläche 26 erstreckt, der gegenüber der Anlagefläche 14, der Verbindungsfläche 16 und der Oberfläche 22 um einen spitzen Winkel α geneigt ist. Die Querfläche 26 weist zudem seitliche Fasen 28 auf, die sich von der freien Kante 24 aus erstrecken und durch die Oberfläche 22 begrenzt werden.

Durch den Absatz 18 sind von der Oberfläche 22 bis zur Anlagefläche 14 zwei Aufnahmekanäle 30, 32 gebohrt, die der Aufnahme von Schrauben dienen und eine Senkung 34 für einen Schraubenkopf aufweisen. Die Aufnahmekanäle 30, 32 beginnen jeweils an einer Stelle in der Rückfläche 22, die zu beiden Hufeisenschenkeln 20 denselben Abstand aufweist. Sie verlaufen jedoch um einen Winkel β zur Senkrechten auf die Rückfläche 22 geneigt, und zwar in entgegengesetzten Richtungen: Der in Fig. 1 obere Aufnahmekanal 30 verläuft schräg nach rechts, während der in Fig. 1 untere Aufnahmekanal 32 schräg nach links verläuft. Mit Ausnahme der Aufnahmekanäle 30, 32 ist der Verbindungskörper 10 spiegelsymmetrisch bezüglich einer Längsmittelebene 35.

Im Bereich zwischen den Hufeisenschenkeln 20 werden die Anlagefläche 14 und die Verbindungsfläche 16 durch eine eine randoffene Ausnehmung 60 in der Grundplatte 12 begrenzende Begrenzungsfläche 62 miteinander verbunden. Diese ist zu den Enden der Hufeisenschenkel 20 abgeschrägt, so dass sich die Ausnehmung 60 zu ihrem offenen Rand hin aufweitet. Der um den Winkel α geneigte Abschnitt der Querfläche 26 findet seine Fortsetzung in dem mit ihm fluchtenden hinteren Abschnitt 64 der Begrenzungsfläche 62. Dabei ist, läßt man die Fasen 28 und die Abschrägungen an den Enden der Hufeisenschenkel 20 außer acht, die Begrenzungsfläche 62 in ihrer Form identisch mit der Querfläche 26. Könnte man den Absatz 18 von der Grundplatte 12 ablösen, so ließe er sich um eine senkrecht auf der Längsmittelebene 35 stehende Schnittlinie 66 der Querfläche 26 mit der Verbindungsfläche 16 formschlüssig in die randoffene Ausnehmung 60 verschwenken. Die Schnittlinie 66 verläuft exakt in der Mitte des Verbindungskörpers 10. Dies hat zur Folge, dass zwei identische Verbindungskörper 10 so zusammengefügt werden können, dass sie einen nahezu massiven Quader mit abgerundeten Ecken ergeben.

Zur besseren Fixierung an einem Holzbauteil weist der Verbindungskörper 10 aus der Anlagefläche 14 vorstehende Fixierdorne 36 auf. Zudem weist die Anlagefläche 14 aufgeraute Flächenpartien 38 auf. Des Weiteren sind durch die Hufeisenschenkel 20 weitere seitliche Aufnahmekanäle 40 gebohrt, die ebenfalls der Aufnahme von Schrauben dienen und teilweise senkrecht, teilweise gegen die Senkrechte geneigt durch die Grundplatte 12 verlaufen. Die Neigung der seitlichen Aufnahmekanäle 40 gegen die Senkrechte kann in verschiedenen Richtungen verlaufen. In Fig. 1 verlaufen die Aufnahmekanäle 40 in Richtung zur Anlagefläche 14 und von den freien Enden der Hufeisenschenkel 20 weg. Eine Neigung in entgegengesetzter Richtung ist aber ebenfalls möglich. Schließlich erstreckt sich ein weiterer Aufnahmekanal 42 durch den Absatz 18, dessen Mittelachse 44 durch die Schnittlinie der Querfläche 26 und des hinteren Abschnitts 64 der Verbindungsfläche 62 mit der Längsmittelebene 35 gebildet wird.

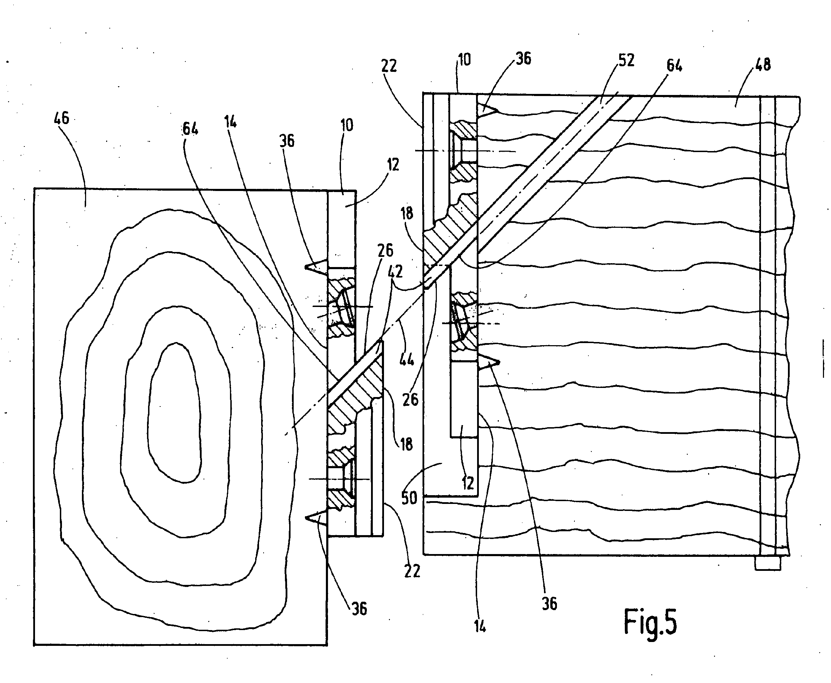

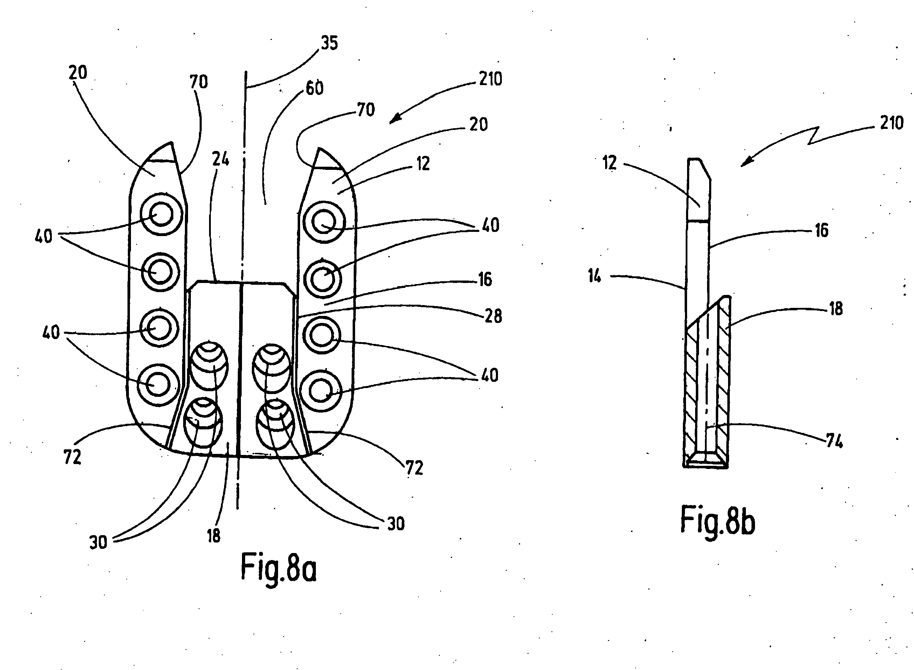

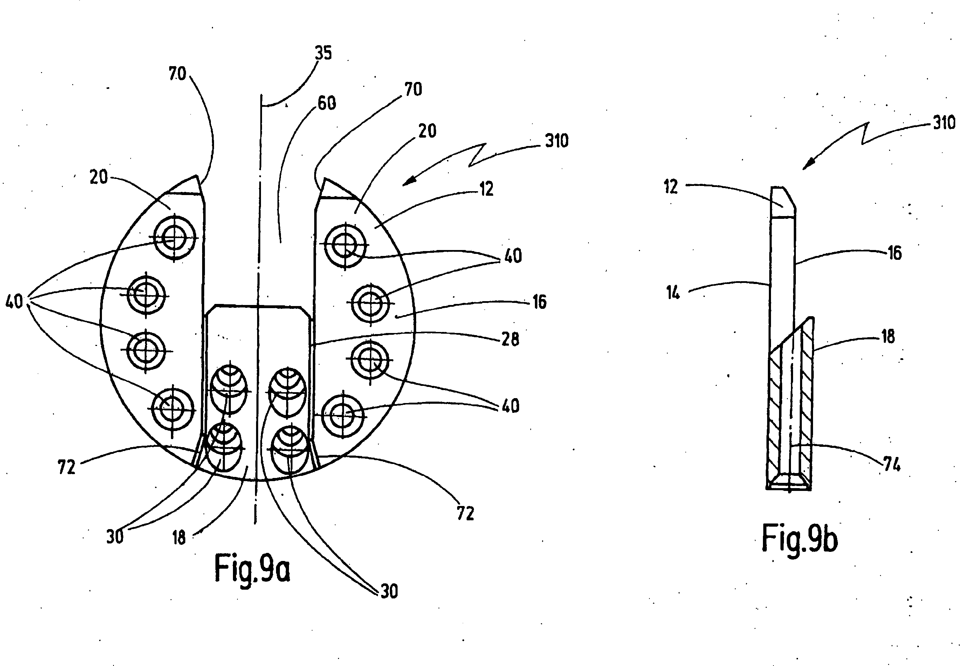

Fig. 5 zeigt beispielhaft, wie zwei Verbindungskörper 10 eine Verbindungsvorrichtung zur Verbindung zweier Holzbauteile 46, 48 bilden. Ein erster Verbindungskörper 10 wird an einem Hauptträger 46 befestigt, so dass seine Anlagefläche 14 plan an einer Fläche des Hauptträgers 46 anliegt. Die Fixierdorne 36 und die aufgerauten Flächenpartien 38 ermöglichen eine erste, provisorische Fixierung. Anschließend werden Schrauben durch die seitlichen Aufnahmekanäle 40 in das Holz des Hauptträgers 46 eingeschraubt, wobei zunächst die senkrecht verlaufenden Schrauben, dann die gegen die Senkrechte geneigten Schrauben eingeschraubt werden. Zur Befestigung der Verbindungskörper 10 an Betonträgern ist wenigstens ein Teil der seitlichen Aufnahmekanäle 40 auch für die Aufnahme von Betonankern geeignet. Zuletzt werden die Schrauben durch die gegeneinander geneigten Aufnahmekanäle 30, 32 im Absatz 18 in den Hauptträger 46 eingeschraubt. Am Nebenträger 48 wird ein Bereich 50 ausgefräst, in dem ein zweiter Verbindungskörper 10 auf dieselbe Weise befestigt wird. Der Bereich 50 wird bis zu einer Tiefe gefräst, die der Höhe des Verbindungskörpers 10 im Bereich des Absatzes 18 entspricht. Ist auch der zweite Verbindungskörper 10 am Nebenträger 48 auf dieselbe Weise befestigt wie der Verbindungskörper 10 am Hauptträger 46, können beide Holzbauteile 46, 48 miteinander verbunden werden. Hierzu werden die geneigten Abschnitte der Querflächen 26 aufeinander gesetzt, so dass der Nebenträger 48 wie auf einer schiefen Ebene nach unten gleitet, bis die Verbindungsflächen 16 der beiden Verbindungskörper 10 aufeinander liegen und die Querflächen 26 an der Verbindungsfläche 62 des jeweils anderen Verbindungskörpers 10 anliegen. Schließlich wird durch eine Bohrung 52 im Nebenträger 48 eine Schraube durch die zusammengefügten mittigen Aufnahmekanäle 42 durchgeführt und zur kraftschlüssigen Verbindung in den Hauptträger 46 eingeschraubt. Dabei handelt es sich in der Regel um eine Holzschraube, die mit den Verbindungskörpern 10 nicht fest verbunden ist. Statt des weiteren Aufnahmekanals 42 kann jeder der Verbindungskörper 10 auch einen längs durch den Absatz 18 verlaufenden Aufnahmekanal aufweisen, der sich zusammen mit dem entsprechenden Aufnahmekanal des jeweils anderen Verbindungskörpers 10 über die gesamte Länge der Verbindungsvorrichtung erstreckt. In diesen Aufnahmekanal wird bevorzugt eine Blechschraube eingeführt, deren Durchmesser geringfügig größer ist als der Innendurchmesser des Aufnahmekanals, so dass die Blechschraube nicht nur in den Hauptträger 46 eingreift, sondern sich auch formschlüssig mit den Verbindungskörpern 10 verbindet. Ein solcher Verbindungskanal ist bei den weiter unten beschriebenen dritten und vierten Ausführungsbeispielen gezeigt und in Fig. 8b, 9b mit dem Bezugszeichen 74 versehen.

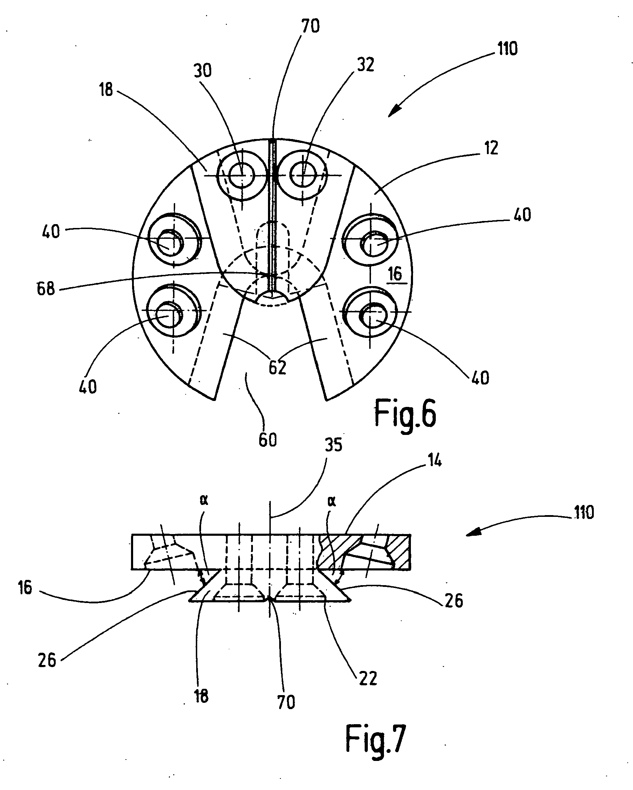

Ein Verbindungskörper 110 gemäß dem zweiten Ausführungsbeispiel (Fig. 6, 7) ist im Prinzip ähnlich gestaltet wie der Verbindungskörper 10 gemäß dem ersten Ausführungsbeispiel. Gleiche Merkmale sind daher mit gleichen Bezugszeichen versehen. Die Grundplatte 12 des Verbindungskörpers 110 weist eine kreisrunde Außenkontur auf. Die Oberfläche 22 des Absatzes 18 dagegen weist eine in etwa parabelförmige Außenkontur auf. Die Querfläche 26 zwischen der Oberfläche 22 und der Verbindungsfläche 16 ist umlaufend zur Oberfläche 22 um den spitzen Winkel α geneigt, so dass der Absatz 18 die Form eines Schwalbenschwanzes aufweist. Dementsprechend ist die Begrenzungsfläche 62 zwischen der Anlagefläche 14 und der Verbindungsfläche 16 gegen die Anlagefläche 14 und die Verbindungsfläche 16 ebenfalls um den Winkel α geneigt. Zudem entspricht die Höhe des Absatzes 18 der Dicke der Grundplatte 12. Die Querfläche 26 und die Begrenzungsfläche 62 sind dadurch in ihrer Form identisch ausgeführt, so dass der Absatz 18 formschlüssig in die randoffene Ausnehmung 60 eingefügt werden könnte, falls man ihn von der Grundplatte 12 lösen könnte. Die Querfläche 26 und die Begrenzungsfläche 62 stoßen nur in einem Punkt 68 aneinander, der sich in der Mitte der kreisrunden Grundplatte 12 befindet. Zwei identische Verbindungskörper 110 können dadurch so zusammengesetzt werden, dass sich ein nahezu massiver Zylinder ergibt.

Zum Befestigen des Verbindungskörpers 110 an einem Holzbauteil erstrecken sich zwei senkrecht durch die Oberfläche 22 und die Anlagefläche 14 gebohrte Aufnahmekanäle 30, 32 für Schrauben. Desweiteren erstrecken sich durch die Grundplatte 12 hindurchgebohrte weitere Aufnahmekanäle 40, die paarweise in entgegengesetzte Richtungen geneigt sind: die rechts dargestellten Aufnahmekanäle 40 erstrecken sich in Fig. 6 nach rechts unten, die links dargestellten nach links unten. Um den Verbindungskörper 110 an einem Holzbauteil besser ausrichten zu können, verläuft über die Oberfläche 22 des Absatzes 18 in der Symmetrieebene 35 eine Ausrichtkerbe 70.

Die Verbindungskörper 210, 310 gemäß dem dritten Ausführungsbeispiel (Fig. 8a, 8b) und gemäß dem vierten Ausführungsbeispiel (Fig. 9a, 9b) sind im Prinzip ähnlich gestaltet wie der Verbindungskörper 10 gemäß dem ersten Ausführungsbeispiel. Gleiche Merkmale sind daher mit gleichen Bezugszeichen versehen. Während die Grundplatte 12 des Verbindungskörpers 210 die Außenkontur eines abgerundeten Rechtecks aufweist, weist die Grundplatte 12 des Verbindungskörpers 310 gemäß dem vierten Ausführungsbeispiel eine kreisrunde Außenkontur auf. In den übrigen Merkmalen stimmen die Verbindungskörper 210, 310 gemäß dem dritten und vierten Ausführungsbeispiel jedoch im wesentlichen überein. Beide Verbindungskörper 210, 310 weisen vier durch den Absatz 18 verlaufende Aufnahmekanäle 30 auf. Diese sind, im Gegensatz zu den Aufnahmekanälen 30, 32 des ersten und des zweiten Ausführungsbeispiels, zwar unter einem Winkel gegen die Senkrechte auf die Anlagefläche und die Verbindungsfläche 16 geneigt, jedoch, im Gegensatz zum ersten Ausführungsbeispiel, um denselben Winkel in dieselbe Richtung. Desweiteren weisen die Verbindungskörper 210, 310 an den freien Enden ihrer Hufeisenschenkel 20 jeweils eine Einführschräge 70 für den Absatz 18 eines identischen Verbindungskörpers 210, 310 auf. Zusätzlich ist auch jeweils der Absatz 18 am entgegengesetzten Ende des Verbindungskörpers 210, 310 mit einer komplementären, nach außen geneigten Schräge 72 auf beiden Seiten versehen. Sowohl die Einführschräge 70 als auch die Schräge 72 können zusätzlich gegen die Zeichenebene geneigt sein, so dass die freien Enden der Hufeisenschenkel 20 jeweils ein Stück weit den Absatz 18 untergreifen. Werden zwei identische Verbindungskörper 210, 310 zusammengefügt, so liegen die Einführschrägen 70 und die Schrägen 72 der Absätze 18 plan aufeinander auf und bilden eine Schwalbenschwanzverbindung, so dass die beiden Verbindungskörper 210, 310 nicht parallel zur Zeichenebene der Fig. 8a, 9a und senkrecht zur Symmetrieebene der Verbindungskörper 210, 310 gegeneinander verschiebbar sind.

### Zusammenfassend ist folgendes festzuhalten:

Die Erfindung betrifft einen Verbindungskörper 10, 110, 210, 310 zur Herstellung einer Verbindung zwischen zwei Bauteilen, insbesondere zwischen zwei Holzbauteilen 46, 48, mit einer Grundplatte 12, die eine Anlagefläche 14 zur Anlage an einem der Bauteile 46, 48 aufweist, mit einem aus einer der Anlagefläche 14 abgewandten, zur ihr parallelen Verbindungsfläche 16 hervorstehenden Absatz 18, der eine zur Anlagefläche 14 parallele Oberfläche 22 aufweist, wobei sich von der Oberfläche 22 zur Verbindungsfläche 16 eine zumindest abschnittsweise gegen die Oberfläche 22 um einen spitzen Winkel α geneigte Querfläche 26 erstreckt, und mit Befestigungsmitteln zum Befestigen an einem der Bauteile. Erfindungsgemäß ist vorgesehen, dass die Grundplatte 12 eine randoffene Ausnehmung 60 aufweist, die sich bis zum Absatz 18 erstreckt und von einer zwischen der Verbindungsfläche 16 und der Anlagefläche 14 verlaufenden Begrenzungsfläche 62 begrenzt wird, dass zumindest ein an die Ausnehmung 60 angrenzender Abschnitt der Querfläche 26 und ein an den Absatz 18 angrenzender Abschnitt der Begrenzungsfläche 62 eine identische Form aufweisen und dass die formidentischen Abschnitte der Querfläche 26 und der Begrenzungsfläche 62 jeweils bezüglich einer gemeinsamen Symmetrieebene 35 symmetrisch sind.

## Patentansprüche

1. Verbindungskörper zur Herstellung einer Verbindung zwischen zwei Bauteilen, insbesondere zwischen zwei Holzbauteilen (46, 48), mit einer Grundplatte (12), die eine Anlagefläche (14) zur Anlage an einem der Bauteile (46, 48) aufweist, mit einem aus einer der Anlagefläche (14) abgewandten, zu ihr parallelen Verbindungsfläche (16) hervorstehenden Absatz (18), der eine zur Anlagefläche (14) parallele Oberfläche (22) aufweist, wobei sich von der Oberfläche (22) zur Verbindungsfläche (16) eine zumindest abschnittsweise gegen die Oberfläche (22) um einen spitzen Winkel (α) geneigte Querfläche (26) erstreckt, und mit Befestigungsmitteln zum Befestigen an einem der Bauteile (46, 48), **dadurch gekennzeichnet, dass** die Grundplatte (12) eine randoffene Ausnehmung (60) aufweist, die sich bis zum Absatz (18) erstreckt und von einer zwischen der Verbindungsfläche (16) und der Anlagefläche (14) verlaufenden Begrenzungsfläche (62) begrenzt wird, dass zumindest ein an die Ausnehmung (60) angrenzender Abschnitt der Querfläche (26) und ein an den Absatz (18) angrenzender Abschnitt der Begrenzungsfläche (62) eine identische Form aufweisen und dass die formidentischen Abschnitte der Querfläche (26) und der Begrenzungsfläche (62) jeweils bezüglich einer gemeinsamen Symmetrieebene (35) symmetrisch sind.

2. Verbindungskörper nach Anspruch 1, **dadurch gekennzeichnet, dass** die Verbindungsfläche (16) in einer Mittelebene zwischen der Anlagefläche (14) und der Oberfläche (22) liegt.

3. Verbindungskörper nach Anspruch 1 oder 2, **dadurch gekennzeichnet, dass** sich der Absatz (18) von der randoffenen Ausnehmung (60) entlang einer in der Symmetrieebene (35) verlaufenden Längsachse bis zum Rand der Grundplatte (12) erstreckt.

4. Verbindungskörper nach einem der vorangehenden Ansprüche, **dadurch gekennzeichnet, dass** die Querfläche (26) einen ebenen Abschnitt aufweist, der zur Oberfläche (22) um den spitzen Winkel (α) geneigt ist.

5. Verbindungskörper nach Anspruch 4, **dadurch gekennzeichnet, dass** der ebene Abschnitt der Querfläche (26) mit einem formidentischen Abschnitt der Begrenzungsfläche (62) fluchtet.

6. Verbindungskörper nach einem der Ansprüche 1 bis 3, **dadurch gekennzeichnet, dass** die Querfläche (26) einen gebogenen Abschnitt aufweist, der an einen formidentischen Abschnitt der Begrenzungsfläche (62) angrenzt.

7. Verbindungskörper nach einem der vorangehenden Ansprüche, **dadurch gekennzeichnet, dass** die Befestigungsmittel zwei sich durch die Grundplatte (12) und gegebenenfalls durch den Absatz (18) erstreckende Aufnahmekanäle (30, 32) für die Aufnahme von stiftförmigen Verbindungsmitteln, insbesondere Schrauben oder Nägeln, aufweisen.

8. Verbindungskörper nach Anspruch 7, **dadurch gekennzeichnet, dass** die Aufnahmekanäle (30, 32) in verschiedenen Richtungen gegen die Senkrechte auf die Anlagefläche (14) geneigt sind.

9. Verbindungskörper nach Anspruch 7 oder 8, **dadurch gekennzeichnet, dass** die Aufnahmekanäle (30, 32) um denselben Winkel gegen die Senkrechte geneigt sind.

10. Verbindungskörper nach Anspruch 8 oder 9, **dadurch gekennzeichnet, dass** die Aufnahmekanäle (30, 32) in entgegengesetzte Richtungen gegen die Senkrechte geneigt sind.

11. Verbindungskörper nach einem der Ansprüche 7 bis 10, **dadurch gekennzeichnet, dass** die Befestigungsmittel weitere Aufnahmekanäle (40) für stiftförmige Verbindungsmittel aufweisen.

12. Verbindungskörper nach einem der vorangehenden Ansprüche, **dadurch gekennzeichnet, dass** die Befestigungsmittel mindestens einen aus der Anlagefläche (14) vorstehenden Fixierdom (36) aufweisen.

13. Verbindungskörper nach einem der vorangehenden Ansprüche, **dadurch gekennzeichnet, dass** die Anlagefläche (14) wenigstens teilweise aufgerauht ist.

14. Verbindungkörper nach einem der vorangehenden Ansprüche, **dadurch gekennzeichnet, dass** sich durch den Absatz (18) ein weiterer Aufnahmekanal (42) für ein stiftförmiges Verbindungsmittel erstreckt, dessen Mittelachse (44) in der Querfläche (26) und der Begrenzungsfläche (62) verläuft.

15. Vorrichtung zum Verbinden zweier Bauteile, insbesondere zweier Holzbauteile, mit zwei identischen Verbindungskörpern (10, 110, 210, 310) nach einem der vorangehenden Ansprüche, wobei jeweils ein Abschnitt der Querfläche (26) des einen Verbindungskörpers (10, 110, 210, 310) am formidentischen Abschnitt der Begrenzungsfläche (62) des anderen Verbindungskörpers (10, 110, 210, 310) anliegt.

## Claims

1. Connecting body for establishing a connection between two components, in particular between two wood components (46, 48), having a base plate (12), which has a bearing surface for contact with one of the components (46, 48), having a step (18) projecting from a connecting surface (16) facing away from the bearing surface (14) and parallel thereto, which step has a surface (22) parallel to the bearing surface (14), a transverse surface (26) inclined at least in sections towards the surface (22) at an acute angle (α) extending from the surface (22) to the connecting surface (16), and having fixing means for fixing to one of the components (46, 48), **characterised in that** the base plate (12) has a recess (60) open at the edge, which extends to the step (18) and is delimited by a boundary surface (62) running between the connecting surface (16) and the bearing surface (14), **in that** at least one section of the transverse surface (26) adjacent to the recess (60) and one section of the boundary surface (62) adjacent to the step (18) have an identical shape and **in that** the identically-shaped sections of the transverse surface (26) and of the boundary surface (62) are in each case symmetrical with respect to a common plane of symmetry (35).

2. Connecting body according to Claim 1, **characterised in that** the connecting surface (16) lies in a centre plane between the bearing surface (14) and the surface (22).

3. Connecting body according to Claim 1 or 2, **characterised in that** the step (18) extends from the recess (60), open at the edge, along a longitudinal axis running in the plane of symmetry (35), to the edge of the base plate (12).

4. Connecting body according to any one of the preceding claims, **characterised in that** the transverse surface (26) has a planar section, which is inclined to the surface (22) at the acute angle (α).

5. Connecting body according to Claim 4, **characterised in that** the planar section of the transverse surface (26) aligns with an identically-shaped section of the boundary surface (62).

6. Connecting body according to any one of Claims 1 to 3, **characterised in that** the transverse surface (26) has a bent section, which is adjacent to an identically-shaped section of the boundary surface (62).

7. Connecting body according to any one of the preceding claims, **characterised in that** the fixing means have two receiving channels (30, 32) extending through the base plate (12) and optionally through the step (18) for receiving pin-shaped connection means, in particular screws or nails.

8. Connecting body according to Claim 7, **characterised in that** the receiving channels (30, 32) are inclined in different directions towards the perpendicular to the bearing surface (14).

9. Connecting body according to Claim 7 or 8, **characterised in that** the receiving channels (30, 32) are inclined at the same angle towards the perpendicular.

10. Connecting body according to Claim 8 or 9, **characterised in that** the receiving channels (30, 32) are inclined in opposing directions towards the perpendicular.

11. Connecting body according to any one of Claims 7 to 10, **characterised in that** the fixing means have further receiving channels (40) for pin-shaped connection means.

12. Connecting body according to any one of the preceding claims, **characterised in that** the fixing means have at least one fixing mandrel (36) projecting out from the bearing surface (14).

13. Connecting body according to any one of the preceding claims, **characterised in that** the bearing surface (14) is roughened at least in parts.

14. Connecting body according to any one of the preceding claims, **characterised in that** a further receiving channel (42) for a pin-shaped connection means extends through the step (18), the centre axis (44) of which receiving channel (42) runs in the transverse surface (26) and the boundary surface (62).

15. Device for connecting two components, in particular wood components, having two identical connecting bodies (10, 110, 210, 310) according to any one of the preceding claims, one section of the transverse surface (26) of the one connecting body (10, 110, 210, 310) in each case bearing against the identically-shaped section of the boundary surface (62) of the other connecting body (10, 110, 210 310).

## Revendications

1. Corps de liaison conçu pour instaurer une solidarisation entre deux pièces structurelles, notamment entre deux pièces structurelles (46, 48) en bois, comprenant une plaque de base (12) munie d'une surface de contact (14) destinée à venir en applique contre l'une desdites pièces structurelles (46, 48) ; un gradin (18) qui fait saillie au-delà d'une surface de liaison (16) tournée à l'opposé de ladite surface de contact (14) et parallèle à cette dernière, et qui est pourvu d'une surface (22) parallèle à ladite surface de contact (14), sachant qu'une surface transversale (26) partant de ladite surface (22) et gagnant ladite surface de liaison (16) est inclinée d'un angle aigu (α), au moins par zones, vis-à-vis de ladite surface (22) ; et des moyens de fixation en vue de la fixation à l'une desdites pièces structurelles (46, 48), **caractérisé par le fait que** la plaque de base (12) comporte un évidement (60) à ouverture marginale, s'étendant jusqu'au gradin (18) et délimité par une surface de délimitation (62) interposée entre la surface de liaison (16) et la surface de contact (14) ; **par le fait qu'**au moins un tronçon de la surface transversale (26), contigu audit évidement (60), et un tronçon de ladite surface de délimitation (62), contigu au gradin (18), possèdent une configuration identique ; et **par le fait que** lesdits tronçons de la surface transversale (26) et de la surface de délimitation (62), dotés d'une configuration identique, sont respectivement symétriques par rapport à un plan commun de symétrie (35).

2. Corps de liaison selon la revendication 1, **caractérisé par le fait que** la surface de liaison (16) se trouve dans un plan médian situé entre la surface de contact (14) et la surface (22).

3. Corps de liaison selon la revendication 1 ou 2, **caractérisé par le fait que** le tracé du gradin (18) part de l'évidement (60) à ouverture marginale et gagne le bord de la plaque de base (12), le long d'un axe longitudinal s'étendant dans le plan de symétrie (35).

4. Corps de liaison selon l'une des revendications précédentes, **caractérisé par le fait que** la surface transversale (26) comporte un tronçon plan incliné, de l'angle aigu (α), vis-à-vis de la surface (22).

5. Corps de liaison selon la revendication 4, **caractérisé par le fait que** le tronçon plan de la surface transversale (26) se trouve dans l'alignement d'un tronçon de la surface de délimitation (62), doté d'une configuration identique.

6. Corps de liaison selon l'une des revendications 1 à 3, **caractérisé par le fait que** la surface transversale (26) présente un tronçon déjeté, limitrophe d'un tronçon de la surface de délimitation (62) qui est doté d'une configuration identique.

7. Corps de liaison selon l'une des revendications précédentes, **caractérisé par le fait que** les moyens de fixation comprennent deux canaux de réception (30, 32) qui traversent la plaque de base (12), et éventuellement le gradin (18), en vue de recevoir des moyens de liaison de forme longiligne, en particulier des vis ou des clous.

8. Corps de liaison selon la revendication 7, **caractérisé par le fait que** les canaux de réception (30, 32) sont inclinés dans des directions différentes vis-à-vis de la perpendiculaire à la surface de contact (14).

9. Corps de liaison selon la revendication 7 ou 8, **caractérisé par le fait que** les canaux de réception (30, 32) sont inclinés du même angle par rapport à la perpendiculaire.

10. Corps de liaison selon la revendication 8 ou 9, **caractérisé par le fait que** les canaux de réception (30, 32) sont inclinés dans des directions opposées par rapport à la perpendiculaire.

11. Corps de liaison selon l'une des revendications 7 à 10, **caractérisé par le fait que** les moyens de fixation comprennent des canaux supplémentaires de réception (40), dévolus à des moyens de liaison de forme longiligne.

12. Corps de liaison selon l'une des revendications précédentes, **caractérisé par le fait que** les moyens de fixation comprennent au moins un pointeau (36) de consignation à demeure, faisant saillie au-delà de la surface de contact (14).

13. Corps de liaison selon l'une des revendications précédentes, **caractérisé par le fait que** la surface de contact (14) est rendue rugueuse, au moins en partie.

14. Corps de liaison selon l'une des revendications précédentes, **caractérisé par le fait que** le gradin (18) est traversé par un canal supplémentaire de réception (42) qui est dévolu à un moyen de liaison de forme longiligne, et dont l'axe médian (44) s'étend dans la surface transversale (26) et dans la surface de délimitation (62).

15. Dispositif conçu pour solidariser deux pièces structurelles, notamment deux pièces structurelles en bois, à l'aide de deux corps identiques de liaison (10, 110, 210, 310) conformes à l'une des revendications précédentes, un tronçon respectif de la surface transversale (26) de l'un (10, 110, 210, 310) des corps de liaison étant en applique contre le tronçon, de configuration identique, de la surface de délimitation (62) de l'autre corps de liaison (10, 110, 210, 310).
